# FASCICULE DE BREVET EUROPEEN

(11) **EP 3 840 136 B1**
(45) Date de publication et mention de la délivrance du brevet: **26.07.2023**
(21) Numéro de dépôt: 20211749.5
(22) Date de dépôt: 04.12.2020
(51) Int. Cl.: H01R 24/76, H02G 3/10, H02G 3/16, H02G 3/18, H01H 23/08, H01H 23/20, H01R 9/24, H01R 24/78, H01R 25/00

(54) **MECANISME D'APPAREILLAGE ELECTRIQUE, ENSEMBLE ELECTRIQUE ET APPAREILLAGE ELECTRIQUE ASSOCIES**
MECHANISMUS EINES ELEKTRISCHEN GERÄTS, ENTSPRECHENDE ELEKTRISCHE ANORDUNG UND ENTSPRECHENDES ELEKTRISCHES GERÄT
MECHANISM FOR ELECTRICAL EQUIPMENT, ASSOCIATED ELECTRICAL ASSEMBLY AND ELECTRICAL EQUIPMENT

(30) Priorité: 20.12.2019 FR 1915136
(43) Date de publication de la demande: 23.06.2021
(73) Titulaire: Legrand France, 87000 Limoges (FR); Legrand SNC, 87000 Limoges (FR)
(72) Inventeur: CHAUMENY, Jean-Luc, 87590 saint Just le Martel (FR)
(74) Mandataire: Jacobacci Coralis Harle

(56) Documents cités:
- EP-A1- 1 489 703
- EP-A1- 2 194 617
- EP-A1- 3 309 916

## Description

La présente invention concerne le domaine technique des mécanismes d'appareillage électrique.

Elle concerne plus particulièrement un mécanisme d'appareillage électrique comprenant un socle isolant, présentant une face externe, qui renferme au moins une borne de connexion électrique et est pourvu d'au moins un conduit d'accès à cette borne de connexion électrique, ce conduit d'accès étant délimité par une face interne qui débouche sur un orifice de ladite face externe de ce socle, ledit socle étant destiné à reposer sur un plan de support situé à l'arrière dudit socle.

La borne de connexion électrique est accessible à travers le conduit d'accès dudit socle isolant dans lequel un fil conducteur peut être inséré afin d'être connecté à ladite borne de connexion.

Dans les appareillages électriques connus, les orifices d'entrée des conduits d'accès sont latéraux. Lesdits conduits d'accès s'étendent sensiblement parallèlement audit plan de support et débouchent sur un plan sensiblement perpendiculaire audit plan de support. Lorsque l'appareillage est en place, monté dans ou sur une paroi murale, le plan de support s'étend sensiblement parallèlement à ladite paroi murale et les orifices d'entrée dans les conduits d'accès restent invisibles depuis la face avant de l'appareillage électrique qui est tournée vers l'installateur.

Le câblage du mécanisme d'appareillage nécessite alors de sortir le mécanisme de son boîtier, car les orifices d'entrée des fils électrique sont peu accessibles et difficiles à repérer.

Un autre type d'appareillage électrique est connu du document EP2194617.

Afin de remédier à ces inconvénients de l'état de la technique, l'invention propose un nouveau dispositif de connexion pour un mécanisme d'appareillage électrique dans lequel les orifices d'entrée des fils électriques dans les conduits d'accès aux bornes sont visibles du côté avant de l'appareillage électrique et autorisent ainsi le câblage du mécanisme d'appareillage électrique une fois monté dans le boîtier.

Plus précisément, l'invention propose un dispositif de connexion pour un mécanisme d'appareillage électrique conforme à la revendication 1.

De cette façon, l'installateur peut repérer visuellement l'entrée desdits conduits d'accès et insérer les fils électriques dans ces conduits d'accès sans sortir le mécanisme d'appareillage électrique du boîtier ou de la paroi murale sur ou dans lequel il est monté.

D'autres caractéristiques avantageuses et non limitatives du dispositif de connexion selon l'invention sont décrites dans les revendications 2 à 6.

L'invention concerne également un ensemble électrique pour un appareillage électrique, conforme à la revendication 7.

L'invention concerne également un appareillage électrique conforme à la revendication 8 comprenant un ensemble électrique tel que décrit précédemment et un boîtier ou un cadre d'encastrement logeant au moins partiellement ledit mécanisme.

L'invention concerne un appareillage électrique étanche conforme à la revendication 9, dans lequel ledit enjoliveur ferme de manière étanche le boîtier ou le cadre d'encastrement logeant le mécanisme.

L'invention concerne enfin un commutateur conforme à la revendication 10, dans lequel ledit enjoliveur comprend une touche de commande adaptée à coopérer avec ledit mécanisme d'appareillage électrique.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective avant d'un premier mode de réalisation d'un double mécanisme d'appareillage électrique selon l'invention, monté dans un boîtier,
- la figure 2 est une vue schématique de face du double mécanisme d'appareillage électrique de la figure 1,
- la figure 3 est une vue schématique de profil du double mécanisme d'appareillage électrique de la figure 1,
- la figure 4 est une vue schématique du double mécanisme d'appareillage électrique de la figure 2, en coupe selon le plan AA de la figure 2,
- la figure 5 est une vue schématique éclatée en perspective avant du double mécanisme d'appareillage électrique de la figure 1,
- la figure 6 est une vue schématique en perspective avant d'un deuxième mode de réalisation d'un double mécanisme d'appareillage électrique non compris dans la portée des revendications,
- la figure 7 est une vue schématique de face du double mécanisme d'appareillage électrique de la figure 6,
- la figure 8 est une vue schématique de profil du double mécanisme d'appareillage électrique de la figure 6,
- la figure 9 est une vue schématique du double mécanisme d'appareillage électrique de la figure 7, en coupe selon le plan BB de la figure 7.

Dans la description qui va suivre, par convention, le terme « avant » désignera le côté de l'appareillage électrique orienté vers un utilisateur lorsque cet appareillage est en position d'utilisation sur une paroi, tandis que le terme « arrière » désignera le côté opposé de cet appareillage, tourné vers l'intérieur de la paroi.

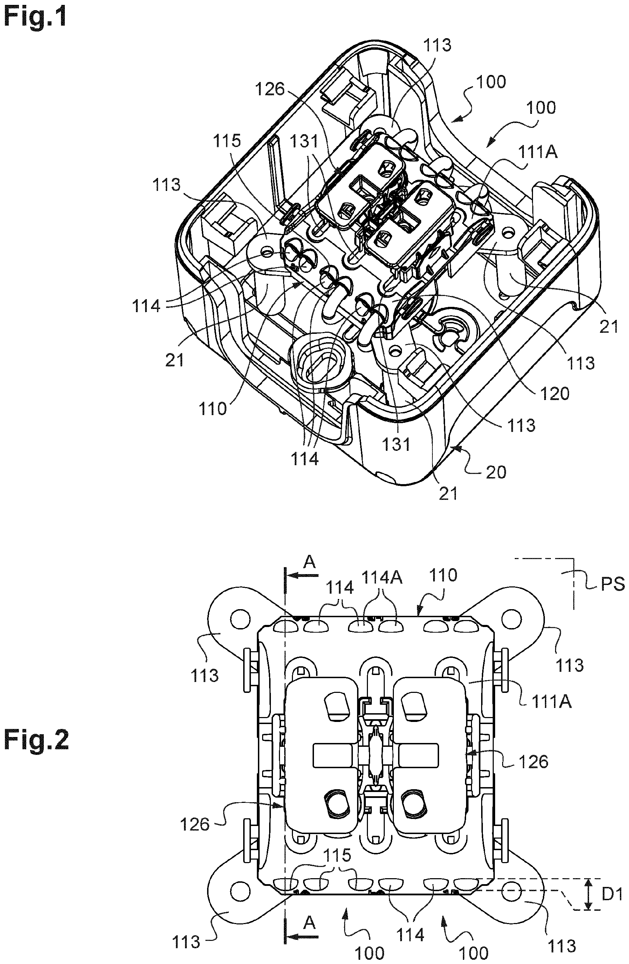

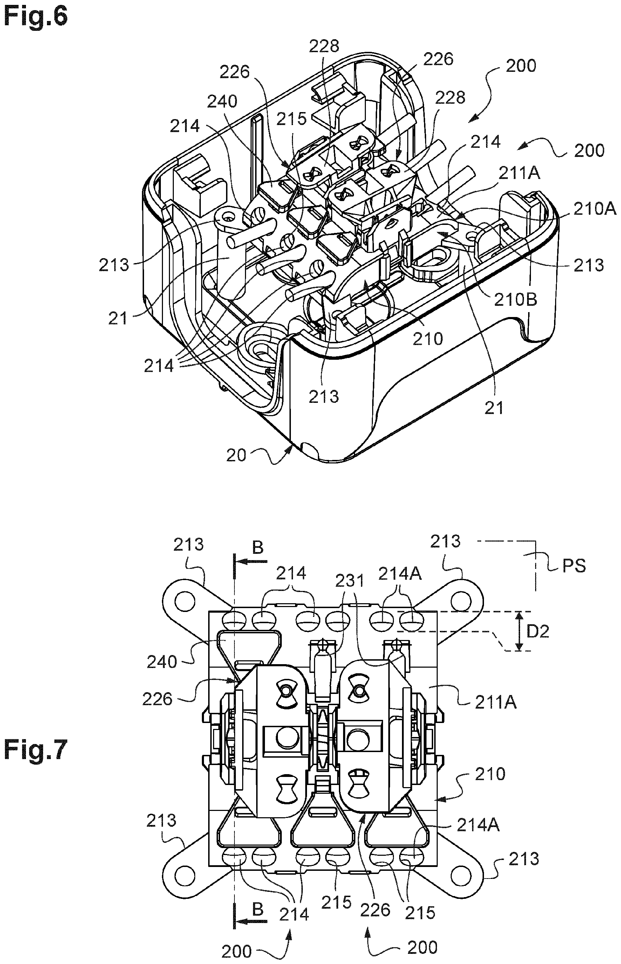

Les figures représentent deux modes de réalisation différents d'un appareillage électrique dont seul le premier mode de réalisation, représenté sur les figures 1 à 5, fait partie de l'invention revendiquée. Le deuxième mode de réalisation représenté sur les figures 6 à 9 est conservé pour l'intelligibilité de la description.

En préliminaire, on notera que, d'une figure à l'autre, les éléments identiques ou similaires de ces différents modes de réalisation de l'invention, seront référencés par les mêmes signes de référence et ne seront pas décrits à chaque fois.

On a représenté sur les figures 1 à 5 et 6 à 9 deux modes de réalisation envisageables d'un double mécanisme d'appareillage électrique 100 ; 200.

Le double mécanisme comporte deux mécanismes 100 ; 200 selon l'invention.

Chaque mécanisme d'appareillage électrique selon l'invention peut être de tout type et peut être utilisé dans différents types d'appareillages électriques. Il s'agit ici plus particulièrement d'un mécanisme pour commutateur électrique, actionné extérieurement par une touche de commande (non représentée).

Il peut s'agir d'un interrupteur ou d'un va-et-vient.

L'appareillage électrique ici représenté comprend un boîtier 20 (figures 1 et 6) qui loge le mécanisme 100; 200. Ce boîtier 20 est destiné à être rapporté sur une paroi murale, selon un montage en saillie. En variante, l'appareillage électrique peut également comprendre un cadre d'encastrement destiné à être rapporté sur une boîte électrique encastrée dans la paroi murale. Il comporte également un enjoliveur qui indique la fonction électrique de cet appareillage électrique.

Ici, l'appareillage électrique est un commutateur électrique. L'enjoliveur comprend une touche de commande (non représentée) adaptée à actionner un entraîneur 126 ; 226 (figures 1, 2, 5, 6 et 7) du mécanisme d'appareillage électrique 100 ; 200.

Le mécanisme d'appareillage électrique 100 ; 200 est raccordé au réseau électrique pour son alimentation.

En outre, avantageusement, l'appareillage électrique représenté sur les figures est un commutateur étanche dans lequel l'enjoliveur auquel appartient chaque touche de commande ferme de manière étanche le boîtier 20 ou le cadre d'encastrement accueillant chaque mécanisme d'appareillage électrique 100 ; 200.

De manière remarquable, il est muni d'un seul socle 110 ; 210 (figures 1, 2, 6, 7) pour les deux mécanismes 100 ; 200. Ce socle 110 ; 210 loge toutes les bornes de connexion électrique 130 et reçoit les deux entraîneurs 126 ; 226 (figures 1, 2, 6, 7) des deux mécanismes 100 ; 200.

Le socle 110 ; 210 forme une enveloppe isolante, réalisée par exemple en matière plastique moulée.

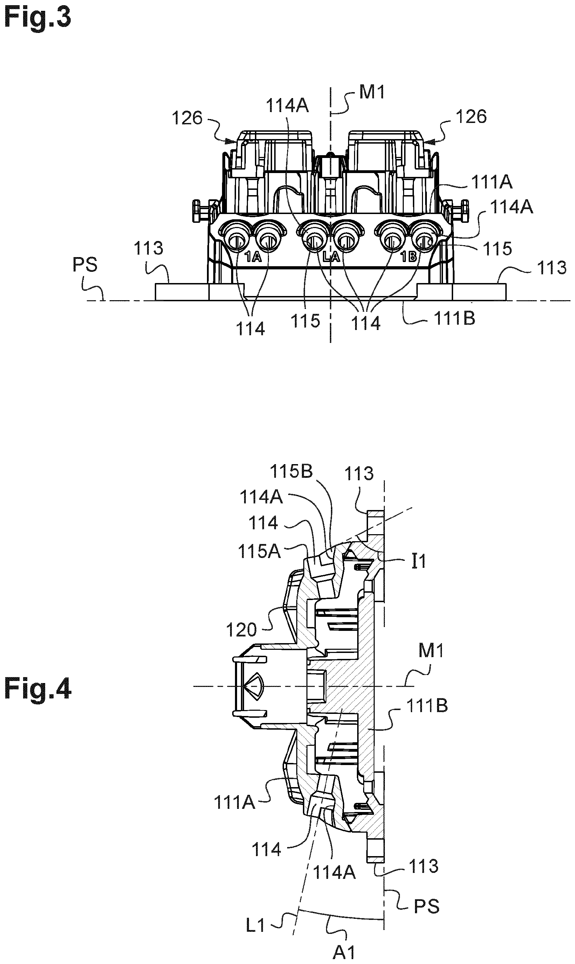

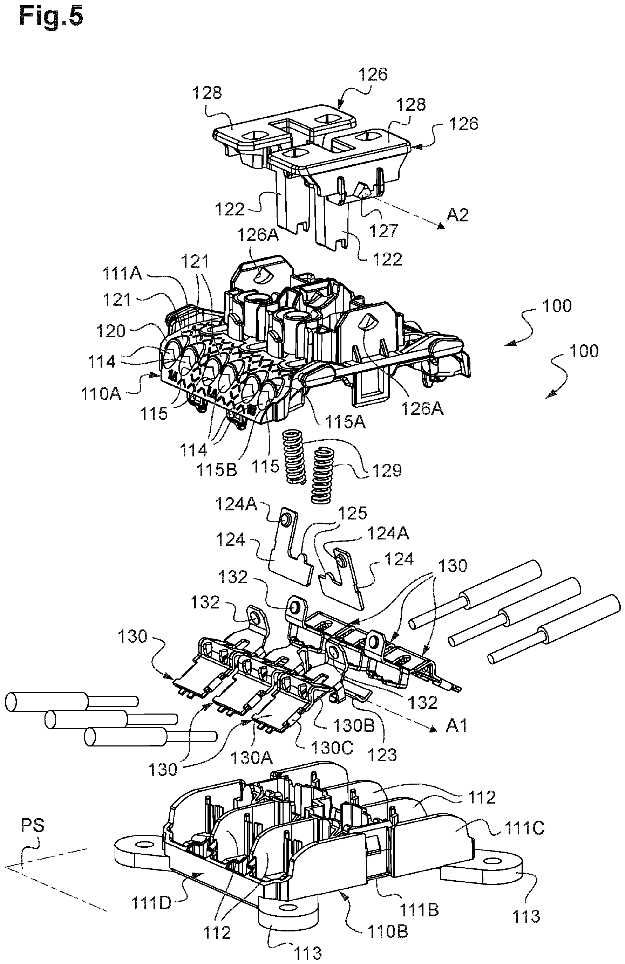

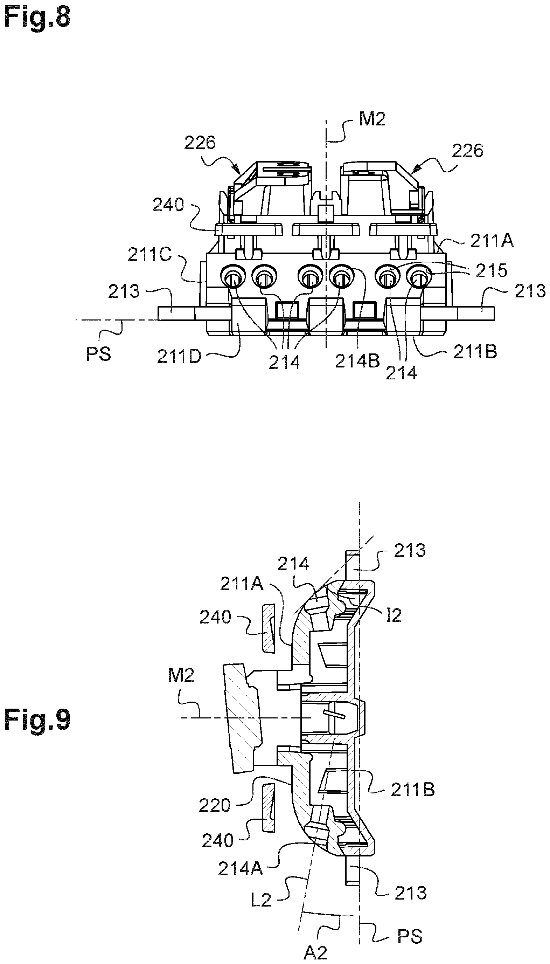

Ce socle 110 ; 210 présente une forme globalement parallélépipédique avec une paroi avant 111A ; 211A et une paroi arrière 111B ; 211B opposées (figures 3, 4, 8, 9). Les parois avant et arrière sont reliées par des parois latérales 111C, 111D ; 211C, 211D (figures 5 et 8). Le socle 110 ; 210 est ici formé par l'assemblage de deux parties : une partie avant 110A ; 210A et une partie arrière 110B ; 210B (figures 5 et 6).

La partie arrière 110B ; 210B du socle 110 ; 210 comporte plusieurs murets internes 112 (figures 5) qui s'élèvent à partir de la paroi arrière 111B ; 211B en direction de la paroi avant 111A ; 211A et délimitent des logements isolés les uns des autres et adaptés à recevoir les bornes de connexion électrique 130 (figures 5).

De façon avantageuse, le socle 110 ; 210 comporte ici six logements, isolés les uns des autres, pour accueillir trois ou six bornes de connexion électrique en fonction qu'il s'agisse d'un mécanisme simple ou d'un mécanisme double. Le socle 110 ; 210 est donc avantageusement le même que le commutateur électrique comprenne une touche de commande ou deux touches de commande.

Ici, le mécanisme d'appareillage électrique 100; 200 est équipé de six bornes de connexion électrique 130 (figure 5), trois bornes de connexion électrique formant un premier circuit électrique d'un mécanisme et trois autres bornes de connexion électrique formant un deuxième circuit électrique d'un autre mécanisme, indépendant du premier circuit électrique.

La partie avant 110A ; 210A du socle 110 ; 210 ferme à l'avant la partie arrière 110B ; 210B de manière à retenir les pièces électriques conductrices logées dans le socle 110 ; 210, notamment les bornes de connexion électrique 130 à raccorder au réseau électrique local.

La partie avant 110A ; 210A du socle 110 ; 210 comporte en outre au moins un conduit d'accès 114 ; 214 (figures 1 à 9) qui autorise l'accès à l'une desdites bornes de connexion électrique 130 logées dans le socle 110 ; 210. La partie avant 110A ; 210A du socle comporte de préférence un ou deux conduits d'accès donnant accès à chaque borne de connexion 130 logée dans le socle 110 ; 210.

Chaque conduit d'accès 114 ; 214 est délimité par une face interne 114A ; 214A qui débouche sur un orifice 115 ; 215 d'une face externe 120 ; 220 (figures 4 et 9) du socle 110 ; 210. Chaque conduit d'accès 114 ; 214 est adapté au passage d'une extrémité dénudée d'un fil électrique pour sa connexion électrique avec la borne de connexion électrique 130 correspondante (figures 2- 4 et 7-9).

Le socle 110 ; 210 comporte ici en outre à ses quatre coins des éléments de montage (figures 2 et 7) pour son montage dans le boîtier 20 en saillie (rapporté quant à lui sur la paroi murale). De préférence, ces éléments de montage autorisent le montage du socle 110, 210 dans le boîtier 20 selon au moins deux orientations perpendiculaires entre elles.

Lorsqu'il est monté dans le boîtier 20, le socle 110 ; 210 est destiné à reposer sur un plan de support PS (figures 2 à 5 et 7 à 9) situé à l'arrière dudit socle 110 ; 210. Ce plan de support PS appartient au socle 110 ; 210.

Les éléments de montage se présentent ici sous la forme de pattes de montage 113 ; 213 s'étendant latéralement, aux quatre coins du socle 110 ; 210 (figures 1 à 9). Elles s'étendent plus précisément selon un plan moyen parallèle audit plan de support PS (figures 1 et 12). Ce plan de support PS est globalement parallèle aux parois avant 111A ; 211A et arrière 111B ; 211B du socle 110 ; 210. Ici, le plan de support PS du socle 110 ; 210 du mécanisme d'appareillage électrique 100 ; 200 comprend plus précisément une face arrière de chaque patte de montage 113 ; 213 (figures 2, 3, 4, 5, 7, 8 et 9).

Ici, les quatre pattes de montage 113 ; 213 présentent une symétrie par rapport à deux plans médians perpendiculaires du socle 110 ; 210. Elles s'étendent selon une direction diagonale du socle 110 ; 210 et sont équidistantes les unes des autres. Chaque patte de montage 113 ; 213 comprend un orifice de passage d'une vis de fixation (figures 2 et 7).

Chaque patte de montage 113 ; 213 est adaptée à être placée contre l'extrémité avant d'un fût de réception 21 s'élevant à partir d'une paroi de fond du boîtier 20 de manière à faire coïncider l'orifice de chaque patte de montage 113 ; 213 avec un orifice central du fût de réception 21 correspondant (figures 1 et 6). Chaque patte de montage 113 ; 213 est alors fixée sur le fût de réception 21 correspondant par le vissage de chaque vis de fixation.

La face arrière de chaque patte de montage 113 ; 213 est alors plaquée contre l'extrémité avant de l'un des fûts de réception 21 du boîtier 20.

Les extrémités des fûts de réception 21 du boîtier 20 matérialisent ici la surface contre laquelle le plan de support PS défini précédemment prend appui lorsque le mécanisme d'appareillage électrique est monté dans le boîtier 20. Les extrémités des fûts de réception 21 du boîtier 20 forment un plan qui se trouve contre le plan de support PS du socle 110 ; 210 lorsque le mécanisme d'appareillage électrique est monté dans le boîtier 20.

En variante, les éléments de montage peuvent comprendre un support d'appareillage se présentant sous la forme d'un cadre entourant le socle. Ce support d'appareillage peut venir de matière avec le socle ou être une pièce distincte du socle sur laquelle le socle est rapporté. Le support d'appareillage et le socle comprennent dans ce cas des moyens d'assemblage réciproques.

En variante encore, le socle comporte par exemple des pattes d'encliquetage élastiques destinées à coopérer par encliquetage avec des parties complémentaires du boîtier ou du cadre d'encastrement.

De manière remarquable, ici, ladite face externe 120 ; 220 du socle 110 ; 210 est agencée autour dudit orifice 115 ; 215 sur lequel débouche chaque conduit d'accès 114, 214 aux bornes de connexion 130 de sorte que ladite face interne 114A; 214A du conduit d'accès 114 ; 214 est partiellement visible pour un utilisateur qui regarde le socle 110 ; 210 par l'avant, selon une direction M1 ; M2 sensiblement perpendiculaire audit plan de support PS (figures 3, 4, 8 et 9).

Ce que voit l'utilisateur selon cette direction est notamment visible sur les figures 2 et 7.

Ladite face externe 120 ; 220 du socle 110 ; 210 présente, sur au moins une partie de cette face externe 120 ; 220 adjacente à chaque orifice 115 ; 215, une inclinaison I1, I2 par rapport audit plan de support PS comprise entre 5 et 85 degrés (figures 4 et 9).

On définit le contour de chaque orifice 115 ; 215 comme l'intersection entre la face interne 114A ; 214A du conduit d'accès 114 ; 214 et la face externe 120 ; 220 du socle 110 ; 210.

Cette inclinaison I1 ; I2 est plus particulièrement définie comme l'angle entre le plan de support PS et un plan moyen ou tangent du contour de l'orifice 115 ; 215, mesuré dans un plan perpendiculaire au plan de support PS et contenant un axe longitudinal du conduit d'accès 114 ; 214 (figures 4 et 9).

En particulier, ladite partie de ladite face externe du socle 110 ; 210 comprend à cet effet un plan incliné ou présente une forme courbée par rapport audit plan de support PS.

Selon l'invention, autour de l'orifice 115 ; 215 sur lequel débouche chaque conduit d'accès 114 ; 214, la face externe 120 ; 220 du socle 110 ; 210 présente une inclinaison telle que la projection du contour de cet orifice 115 ; 215 sur le plan de support PS enferme une surface non nulle. Le contour de l'orifice 115 ; 215 est ainsi visible selon une direction d'observation perpendiculaire au plan de support PS.

Dans les modes de réalisation représentés sur les figures, cette face externe présente une forme globalement courbée (figures 4 et 9). Cette courbure est ici convexe, ce qui permet d'optimiser l'espace intérieur du socle 110 ; 210 disponible pour loger les bornes 130 de connexion.

La partie de la face externe 120 ; 220 qui présente cette inclinaison I1, I2 est de préférence au moins située autour d'une partie arrière de chaque orifice 115 ; 215.

Selon le premier mode de réalisation représenté sur les figures 1 à 5, une partie avant 115A du contour de chaque orifice 115 s'étend au droit d'une partie intermédiaire dudit contour de l'orifice, cette partie intermédiaire étant située entre la partie avant 115A du contour et une partie arrière 115B de ce contour (figure 4).

La surface externe 120 du socle 110 qui entoure de chaque orifice 115 présente une première inclinaison autour d'une partie avant de l'orifice 115 et une deuxième inclinaison autour de la partie arrière de l'orifice 115.

La partie avant de chaque orifice 115 s'étend pratiquement au droit de la partie arrière et n'est donc que peu ou pas visible pour l'utilisateur regardant le mécanisme perpendiculairement au plan de support PS. En revanche, la partie arrière de chaque orifice 115 est inclinée d'un angle I1 par rapport au plan de support PS qui autorise la visualisation de cette partie arrière de l'orifice 115 par cet utilisateur.

La partie avant de chaque orifice 115 est ici délimitée par un retour 121 de la paroi avant 111A du socle 110 qui s'étend au-dessus d'une partie du conduit d'accès 114. Ce retour 121 guide l'insertion du fil électrique dans le conduit d'accès 114.

En variante, on peut prévoir que la partie avant du contour de chaque orifice s'étende en débord au dessus de la partie intermédiaire dudit contour de l'orifice.

Comme la partie avant du contour de chaque orifice 115 s'étend au-dessus de la partie intermédiaire du contour de cet orifice 115, au droit de cette partie intermédiaire ou en débord au-dessus de celle-ci, le conduit d'accès 114 présente une forme particulièrement apte à guider correctement le fil électrique à l'intérieur du conduit d'accès 114 lorsque le fil électrique est introduit dans celui-ci. En outre, cela limite l'étendue de l'orifice 115 du conduit d'accès 114 dans un plan parallèle au plan de support PS du mécanisme d'appareillage, c'est-à-dire son étendue ouverte vers l'avant.

Selon le deuxième mode de réalisation, non compris dans la portée des revendications, représenté sur les figures 6 à 9, la surface externe 220 est courbée de manière uniforme autour de chaque orifice 215.

En outre, selon l'invention, quel que soit le mode de réalisation considéré, chaque conduit d'accès 114 ; 214 s'étend selon un axe longitudinal L1 ; L2 qui forme avec ledit plan de support PS un angle A1 ; A2 non nul (figures 4 et 9).

De préférence, ledit axe longitudinal L1 ; L2 est incliné d'un angle A1 ; A2 compris entre 5 et 20 degrés par rapport audit plan de support. Cet angle A1 ; A2 est par exemple égale à 11 degrés.

L'inclinaison de l'axe longitudinal L1 ; L2 de chaque conduit d'accès 114 ; 214 par rapport au plan de support PS d'un angle compris entre 5 et 20 degrés, en particulier égale à 11 degrés, permet d'obtenir une ergonomie d'utilisation particulièrement satisfaisante pour le mécanisme d'appareillage électrique. Cette disposition facilite l'insertion du fil électrique dans le conduit d'accès 114 ; 214.

Ladite face interne 114A ; 214A de chaque conduit d'accès 114 ; 214 est de préférence visible sur une longueur D1 ; D2 comprise entre 1 et 5 millimètres à partir d'une partie arrière du contour dudit orifice 115 ; 215 (figures 2 et 7), par exemple égale à 3 millimètres.

Cette disposition est particulièrement intéressante car elle permet d'assurer une visibilité satisfaisante de l'orifice 115; 215 du conduit d'accès 114 ; 214 depuis l'avant du mécanisme d'appareillage électrique 100 ; 200 où se situe l'utilisateur lors de l'insertion des fils électriques dans le conduit d'accès 114 ; 214. L'encombrement global du mécanisme d'appareillage reste limité.

Grâce à l'invention, il est possible de réaliser la connexion électrique des fils électriques une fois que le mécanisme est monté dans le boîtier 20 ou dans le cadre d'encastrement, sans qu'il soit nécessaire de démonter le mécanisme pour le sortir de ce boîtier ou de ce cadre.

En effet, l'utilisateur peut repérer facilement la position de l'orifice de chaque conduit d'accès depuis l'avant du mécanisme et y insérer le fil électrique directement.

Les fils électriques peuvent être insérés facilement, qu'ils soient droits, comme par exemple sur la figure 6 ou qu'ils soient courbés, comme par exemple sur la figure 1. Les fils électriques sont droits par exemple lorsqu'ils arrivent par un côté du boîtier 20, ou courbés par exemple lorsqu'ils pénètrent dans le boîtier 20 par son fond.

Les bornes de connexion électrique 130 ; 230 sont par exemple des bornes à connexion automatique.

Comme le montre plus particulièrement la figure 5, chaque borne de connexion électrique 130 est réalisée par découpage et formage d'un feuillard métallique. Chaque borne de connexion électrique 130 comporte une cage 130A, contre laquelle s'étend une lame-ressort 130B.

Chaque cage 130A conductrice présente ici deux zones planes reliées entre elles par un pont. Une ouverture ménagée dans ce pont autorise le passage de l'extrémité dénudée d'un fil électrique. Une extrémité libre de la lame-ressort 130B pointe sur une zone de contact formée par la face intérieure d'une partie de la cage 130A tandis que l'autre extrémité de la lame-ressort 130B est plaquée contre la cage 130A par des replis latéraux 130C de cette cage (figure 5).

Pour son raccordement électrique à une des bornes de connexion électrique 130 ; 230, l'extrémité dénudée d'un fil électrique (non représenté) provenant du réseau d'alimentation, est introduite, via le conduit d'accès 114 ; 214 prévu dans la partie avant 110A ;210A du socle 110 ; 210 du mécanisme d'appareillage électrique 100; 200, dans la cage 130A de ladite borne, de sorte que l'âme dénudée conductrice dudit fil électrique soit coincée entre la face intérieure de ladite cage 130A et l'extrémité libre de ladite lame-ressort 130B.

La lame-ressort 130B est précontrainte de sorte que sous l'action du fil électrique introduit dans ladite cage, elle s'écarte de ladite zone de contact et elle exerce une pression suffisante sur l'âme métallique dénudée dudit fil électrique afin d'établir un bon contact électrique entre la borne de connexion électrique et l'âme métallique du fil électrique tout en interdisant que le fil électrique ne soit tiré manuellement hors de la cage de manière non intentionnelle (la force de coincement qu'exerce la lame-ressort doit résister à une force de traction normalisée exercée sur le fil électrique).

Pour extraire les fils électriques hors des bornes de connexion électrique 130, il est prévu, de manière connue en soi, des poussettes 240 (figure 6) manoeuvrables à travers des ouvertures 131 ; 231 (figures 1 et 7) pratiquée dans la partie avant 110A ; 210A du socle 110 ; 210 du mécanisme d'appareillage électrique 100 ; 200 pour pousser sur une partie de manoeuvre desdites lames-ressorts 130B desdites bornes de connexion électrique 130 afin d'écarter lesdites lames-ressorts 130B des fils électriques. Ces fils électriques libres de l'emprise des lames-ressorts 130B peuvent être facilement tirés hors du mécanisme d'appareillage électrique 100 ; 200.

De manière classique pour définir un circuit électrique, chaque touche de commande est associée, par l'intermédiaire de chaque entraîneur 126 ; 226, à trois bornes de connexion électrique 130. Parmi les trois bornes de connexion électrique, dans les exemples représentés ici, deux bornes de connexion électrique 130 comprennent un élément de contact fixe.

Plus précisément, ici, la cage 130A de deux bornes de connexion électrique 130 se prolonge par une partie d'extrémité munie d'un grain de contact fixe 132 (figures 2 et 13).

La troisième borne de connexion électrique 130 est quant à elle raccordée, par une plaquette conductrice, à une chape 123 fixe sur laquelle est montée à pivotement une partie mobile appelée balai 124 reçue dans cette chape 123 (figure 5).

Cette chape 123 se présente sous la forme d'un profilé dont la section a une forme de V. Ce profilé s'étend sensiblement parallèlement au plan de support PS (figure 5) situé à l'arrière dudit socle 110 ; 210. Son axe longitudinal définit un axe de pivotement A1 pour le balai 124 (figure 5).

Chaque balai 124 se présente sous la forme d'une plaquette en forme de L, dont une branche est reçue par sa tranche dans la chape 123 de manière à établir le contact électrique et l'autre branche porte à son extrémité libre un grain de contact mobile 124A (figure 5).

A la faveur du déplacement de chaque entraîneur 126 ; 226, chaque balai 124 est adapté à pivoter autour dudit axe de pivotement A1 entre deux positions extrêmes, pour mettre en contact ou hors contact un élément de contact mobile, ici sous la forme du grain de contact mobile 124A porté par le balai 124, avec au moins un grain de contact fixe 132 porté par l'un desdits éléments de contact fixe desdites bornes de connexion électrique 130 (figure 5).

Chaque entraîneur 126 est associé à une seule commande donc à un seul circuit électrique.

L'entraîneur 126 ; 226 est ici monté mobile à pivotement autour d'un axe de basculement sur le socle 110 ; 210 afin de déplacer le balai 124 entre ses deux positions extrêmes.

Il est par exemple monté basculant au moyen de deux tourillons 127 formés sur l'entraîneur 126 ; 226 et respectivement engagés dans deux orifices 126A correspondants formés dans le socle 110 ; 210 de manière à définir un axe de basculement A2 pour l'entraîneur 126 ; 226 (figure 5).

Cet axe de basculement A2 est sensiblement parallèle à l'axe de pivotement A1 du balai 124 associé.

Ici, chaque entraîneur 126 ; 226 est adapté à déplacer le balai 124 correspondant entre une première position extrême permettant de mettre en contact le grain de contact mobile 124A avec un grain de contact 132 fixe et une autre position extrême dans laquelle le grain de contact 124A mobile est mis en contact avec un autre grain de contact 132 fixe.

En variante, chaque entraîneur pourrait être adapté à déplacer le balai correspondant entre une position permettant de mettre en contact le grain de contact mobile avec un grain de contact fixe et une autre position dans laquelle le grain de contact mobile est mis hors contact de ce grain de contact fixe.

Chaque entraîneur 126 ; 226 est une pièce isolante, réalisée par exemple en matière plastique par moulage.

Chaque entraîneur 126 ; 226 comprend une paroi avant 128 ; 228 qui s'étend de part et d'autre de son axe de basculement A2 ; B2 à l'avant du socle 110 ; 210. Il se prolonge vers l'arrière par un élément tubulaire 122 (figure 5).

La largeur de la paroi avant 128 ; 228 de chaque entraîneur 126 ; 226 présente ici une largeur standard dite « un module ».

En variante, l'entraîneur peut présenter une largeur égale au double de la largeur standard, ou une largeur dite de « deux modules ».

L'élément tubulaire 122 est solidaire de l'entraîneur 126 ; 226 (ici venu de matière avec l'entraîneur 126 ; 226) et s'étend vers l'arrière à partir de l'entraîneur 126 ; 226, au niveau de l'axe de basculement, perpendiculairement à celui-ci, et à travers une ouverture ménagée à cet effet dans la partie avant 110A ; 210A du socle 110 ; 210, entre les murets internes 112 de la partie arrière 110B ; 210B du socle 110 ; 210 (figure 5).

Il est prévu également, de manière classique, des moyens élastiques de basculement 129 (figure 5) du balai 124. Ces moyens élastiques de basculement 129 comprennent de manière classique un ressort monté dans l'élément tubulaire 122 associé au balai 124 et apte, après franchissement d'un point dur, à solliciter le balai 124 en direction de l'une ou de l'autre de ses positions extrêmes en fonction de la position de l'entraîneur 126. Pour cela, la branche de chaque balai 124 reçue dans la chape 123 présente, sur sa tranche opposée à la tranche en contact avec la chape 123, un relief 125 sur lequel le ressort formant les moyens élastiques de basculement 129 est monté (figure 5). Le mouvement de chaque entraîneur 126 ; 226 entraîne le mouvement du ressort, qui entraîne le mouvement du balai 124 correspondant.

Ainsi, en manoeuvrant une touche (non représentée) solidaire de chaque entraîneur 126 ; 226, l'utilisateur commande le basculement de chaque entraîneur 126 ; 226 vers l'une de ses positions, ce qui entraîne le basculement des moyens élastiques de basculement 129, et donc du balai 124 associé, de sorte à mettre en contact ou hors contact l'élément de contact mobile 124A avec l'élément de contact fixe 132. Les deux positions de chaque entraîneur 126 ; 226 correspondent aux deux positions extrêmes du balai 124.

Le mouvement de chaque entraîneur 126 ; 226 entraîne ainsi le mouvement du ressort, qui entraîne le mouvement du balai 124 de manière à permettre un basculement rapide et précis du balai entre les deux positions extrêmes tout en évitant la formation d'arcs électriques.

De manière avantageuse ici, un même socle présente donc des moyens de montage permettant d'accueillir un unique entraîneur dans le cas d'une commande simple ou deux entraîneurs différents dans le cas d'une commande double. Un seul socle universel peut donc être fabriqué pour s'adapter à une configuration de commande simple ou de commande double du commutateur électrique conforme à l'invention.

La présente invention n'est pas limitée aux modes de réalisation décrits et représentés sur les différentes figures, mais uniquement par la portée des revendications.

## Revendications

1. Mécanisme d'appareillage électrique (100) comprenant un socle (110) isolant, présentant une face externe (120), qui renferme au moins une borne de connexion électrique (130) et est pourvu d'au moins un conduit d'accès (114) à cette borne de connexion électrique (130), ce conduit d'accès (114) étant délimité par une face interne (114A) qui débouche sur un orifice (115) de ladite face externe (120) de ce socle (110), un contour de l'orifice (115) étant défini comme l'intersection entre la face interne (114A) dudit conduit d'accès (114) et de la face externe (120) du socle (110), ledit socle (110) étant destiné à reposer sur un plan de support (PS) appartenant au socle (110) et situé à l'arrière dudit socle (110), la face externe (120) du socle (110) étant agencée autour dudit orifice (115) de sorte que ladite face interne (114A) du conduit d'accès (114) est partiellement visible pour un utilisateur qui regarde le socle (110) par l'avant, selon une direction (M1) sensiblement perpendiculaire audit plan de support (PS), **caractérisé en ce qu'**une partie avant (115A) du contour dudit orifice (115) s'étend au droit de ou en débord au-dessus d'une partie intermédiaire dudit contour de l'orifice (115), cette partie intermédiaire étant située entre la partie avant (115A) du contour et une partie arrière (115B) de ce contour.

2. Mécanisme d'appareillage électrique (100) selon la revendication 1, dans lequel ladite face externe (120) du socle (110) présente, sur au moins une partie de cette face externe (120) adjacente audit orifice (115), une inclinaison (I1) par rapport audit plan de support (PS) comprise entre 5 et 85 degrés.

3. Mécanisme d'appareillage électrique (100) selon la revendication 2, dans lequel ladite partie de ladite face externe (120) comprend un plan incliné ou présente une forme courbée par rapport audit plan de support (PS).

4. Mécanisme d'appareillage électrique (100) selon l'une des revendications 1 à 3, dans lequel ledit conduit d'accès (114) s'étend selon un axe longitudinal (L1) qui forme avec ledit plan de support (PS) un angle (A1) non nul.

5. Mécanisme d'appareillage électrique (100) selon la revendication 4, dans lequel ledit axe longitudinal (L1) est incliné d'un angle (A1) compris entre 5 et 20 degrés par rapport audit plan de support (PS).

6. Mécanisme d'appareillage électrique (100) selon l'une des revendications 1 à 5, dans lequel ladite face interne (114A) du conduit d'accès (114) est visible sur une longueur (D1) comprise entre 1 et 5 millimètres à partir d'une partie arrière du contour dudit orifice (115).

7. Ensemble électrique pour un appareillage électrique, comprenant un mécanisme (100) d'appareillage électrique selon l'une des revendications précédentes et un enjoliveur indiquant la fonction électrique de l'appareillage électrique.

8. Appareillage électrique comprenant un ensemble électrique selon la revendication précédente et un boîtier ou un cadre d'encastrement logeant au moins partiellement ledit mécanisme (100) d'appareillage électrique.

9. Appareillage électrique selon la revendication 8, cet appareillage électrique étant étanche, dans lequel ledit enjoliveur ferme de manière étanche le boîtier ou le cadre d'encastrement logeant le mécanisme (100) d'appareillage électrique selon l'une des revendications 1 à 7.

10. Appareillage électrique selon l'une des revendications 8 et 9, cet appareillage électrique étant un commutateur électrique, dans lequel ledit enjoliveur comprend une touche de commande adapté à coopérer avec ledit mécanisme (100) d'appareillage électrique.

## Patentansprüche

1. Mechanismus eines elektrischen Geräts (100) mit einem isolierenden Sockel (110), der eine Außenseite (120) aufweist, die mindestens eine elektrische Anschlußklemme (130) umschließt und mit mindestens einem Zugangskanal (114) zu dieser Anschlußklemme (130) versehen ist, wobei dieser Zugangskanal (114) durch eine Innenseite (114A) begrenzt ist, die in ein Loch (115) der Außenseite (120) dieses Sockels (110) mündet, wobei ein Umriß des Lochs (115) als Schnitt der Innenseite (114A) des Zugangskanals (114) mit der Außenseite (120) des Sockels (110) definiert ist, wobei der Sockel (110) dazu bestimmt ist, auf einer zum Sockel (110) gehörenden und auf der Rückseite des Sockels (110) gelegenen Trägerebene (PS) aufzuliegen, wobei die Außenseite (120) des Sockels (110) um das Loch (115) herum so ausgeführt ist, daß die Innenseite (114A) des Zugangskanals (114) für einen Benutzer, der den Sockel (110) von vorne in einer zur Trägerebene (PS) im Wesentlichen senkrechten Richtung (M1) anschaut, teilweise sichtbar ist, **dadurch gekennzeichnet, daß** sich ein vorderer Teil (115A) des Umrisses des Lochs (115) an einem mittleren Teil des Umrisses des Lochs (115) oder überstehend über diesem erstreckt, wobei dieser mittlere Teil zwischen dem vorderen Teil (115A) und einem hinteren Teil (115B) dieses Umrisses liegt.

2. Mechanismus eines elektrischen Geräts (100) gemäß Anspruch 1, bei dem die Außenseite (120) des Sockels (110) mindestens auf einem an das Loch (115) angrenzenden Teil dieser Außenseite (120) eine Neigung (I1) zwischen 5 und 85 Grad gegenüber der Trägerebene (PS) aufweist.

3. Mechanismus eines elektrischen Geräts (100) gemäß Anspruch 2, bei dem dieser Teil der Außenseite (120) gegenüber der Trägerebene (PS) eine schräge Ebene aufweist oder eine gekrümmte Form hat.

4. Mechanismus eines elektrischen Geräts (100) gemäß einem der Ansprüche 1 bis 3, bei dem sich der Zugangskanal (114) entlang einer Längsachse (L1) erstreckt, die mit der Trägerebene (PS) einen von Null verschiedenen Winkel (A1) bildet.

5. Mechanismus eines elektrischen Geräts (100) gemäß Anspruch 4, bei dem die Längsachse (L1) gegenüber der Trägerebene (PS) um einen Winkel (A1) zwischen 5 und 20 Grad geneigt ist.

6. Mechanismus eines elektrischen Geräts (100) gemäß einem der Ansprüche 1 bis 5, bei dem die Innenseite (114A) des Zugangskanals (114) über eine Länge (D1) von 1 bis 5 mm ab einem hinteren Teil des Umrisses des Lochs (115) sichtbar ist.

7. Elektrische Anordnung für ein elektrisches Gerät, die einen Mechanismus eines elektrischen Geräts (100) gemäß einem der vorangehenden Ansprüche und eine die elektrische Funktion des elektrischen Geräts anzeigende Zierkappe aufweist.

8. Elektrisches Gerät mit einer elektrischen Anordnung gemäß dem vorangehenden Anspruch und einem Gehäuse oder einem Einbaurahmen, das beziehungsweise der den Mechanismus eines elektrischen Geräts (100) mindestens teilweise aufnimmt.

9. Elektrisches Gerät gemäß Anspruch 8, wobei das elektrische Gerät dicht ist, bei dem die Zierkappe das Gehäuse oder den Einbaurahmen, das beziehungsweise der den Mechanismus eines elektrischen Geräts (100) gemäß einem der Ansprüche 1 bis 7 aufnimmt, dicht abschließt.

10. Elektrisches Gerät gemäß einem der Ansprüche 8 und 9, wobei das elektrische Gerät ein elektrischer Umschalter ist, bei dem die Zierkappe einen Steuerknopf aufweist, der dazu ausgelegt ist, mit dem Mechanismus eines elektrischen Geräts (100) zusammenzuwirken.

## Claims

1. A mechanism (100) for electrical equipment, comprising an insulating base (110) having an external face (120) which contains at least one electrical connection terminal (130) and is provided with at least one duct (114) for access to this electrical connection terminal (130), this access duct (114) being delimited by an internal face (114A) which opens out into an orifice (115) of said external face (120 ) of this base (110), a contour of the orifice (115) being defined as the intersection between the internal face (114A) of said access duct (114) and of the external face (120) of the base (110), said base (110) being intended to rest on a support plane (PS) belonging to the base (110) and located at the rear of said base (110), the external face (120) of the base (110) being disposed around said orifice (115) in a manner such that said internal face (114A) of the access duct (114) is partially visible to a user who looks at the base (110) from the front, in accordance with a direction (M1) which is substantially perpendicular to said support plane (PS), **characterized in that** a front portion (115A) of the contour of said orifice (115) extends at right angles to or overhangs an intermediate portion of said contour of the orifice (115), this intermediate portion being located between the front portion (115A) of the contour and a rear portion (115B) of this contour.

2. The mechanism (100) for electrical equipment as claimed in claim 1, in which said external face (120) of the base (110) has an inclination (I1) with respect to said support plane (PS) comprised between 5 and 85 degrees over at least a portion of this external face (120) which is adjacent to said orifice (115).

3. The mechanism (100) for electrical equipment as claimed in claim 2, in which said portion of said outer face (120) comprises an inclined plane or has a curved shape with respect to said support plane (PS).

4. The mechanism (100) for electrical equipment as claimed in any one of claims 1 to 3, in which said access duct (114) extends along a longitudinal axis (L1) which forms a non-zero angle (A1) with said support plane (PS).

5. The mechanism (100) for electrical equipment as claimed in claim 4, in which said longitudinal axis (L1) is inclined by an angle (A1) comprised between 5 and 20 degrees with respect to said support plane (PS).

6. The mechanism (100) for electrical equipment as claimed in any one of claims 1 to 5, in which said internal face (114A) of the access duct (114) is visible over a length (D1) comprised between 1 and 5 millimetres proceeding from a rear portion of the contour of said orifice (115).

7. An electrical assembly for electrical equipment, comprising a mechanism (100) for electrical equipment as claimed in one of the preceding claims, and a trim indicating the electrical function of the electrical equipment.

8. Electrical equipment comprising an electrical assembly as claimed in the preceding claim and a back box or a mounting frame which at least partially houses said mechanism (100) for electrical equipment.

9. The electrical equipment as claimed in claim 8, this electrical equipment being sealed, in which said trim sealingly closes the back box or the mounting frame housing the mechanism (100) for electrical equipment as claimed in one of claims 1 to 7.

10. The electrical equipment as claimed in claim 8 or claim 9, said electrical equipment being an electrical switch in which said trim comprises a control button which is adapted to co-operate with said mechanism (100) for electrical equipment.
